# EUROPEAN PATENT APPLICATION

(11) **EP 4 768 884 A1**
(43) Date of publication of application: **01.07.2026**
(21) Application number: 25867306.0
(22) Date of filing: 15.07.2025
(51) Int. Cl.: G01M 3/26, H01M 10/42

(54) **APPARATUS AND METHOD FOR INSPECTING BATTERY TEST EQUIPMENT FOR LEAKAGE**

(30) Priority: 24.09.2024 KR 20240128639
(71) Applicant: LG Energy Solution, Ltd., Seoul 07335 (KR)
(72) Inventor: PARK, Jae Wan, Daejeon 34122 (KR)
(74) Representative: Goddar, Heinz J.
(86) International application number: PCT/KR2025/010330
(87) International publication number: WO 2026/071428

(57) **Abstract**

A battery test equipment leak inspection device according to a preferred exemplary embodiment of the present disclosure includes: a main tube detachably connected to an inspection target including a battery heating module or an inspection target including a flow meter connected to a battery heating module, and configured to communicate with an interior of the inspection target; a gas supply unit connected to the main tube and configured to supply a gas for leak inspection into the inspection target through the main tube; and a pressure measurement unit connected to the main tube and configured to measure a change in gas pressure in the main tube and the inspection target. According to the battery test equipment leak inspection device of the present disclosure, it is possible to secure test reliability by inspecting in advance whether there is a gas leak in battery test equipment before evaluating the thermal stability of a battery using the battery test equipment, and replacing or repairing the entire or part of the equipment when a leak is confirmed.

## Description

### [Technical Field]

The present disclosure relates to a battery test equipment leak inspection device and inspection method, and more specifically, to a battery test equipment leak inspection device and inspection method for inspecting in advance whether there is a gas leak in battery test equipment before measuring a pressure and flow rate of gas generated during battery ignition using the battery test equipment.

### [Background Art]

With the increasing technology development and demand for mobile devices, electric vehicles, hybrid electric vehicles, power storage devices, uninterruptible power supplies, and the like, the demand for secondary batteries as an energy source is rapidly increasing. Representatively, in terms of shape, there is high demand for prismatic or pouch-type secondary batteries, and in terms of materials, there is high demand for lithium-based secondary batteries with high energy density and high discharge capacity per unit time.

The basic unit of a secondary battery is a battery cell, which may be used individually or in the form of a battery module composed of a plurality of battery cells. Recently, as the demand for high-power, large-capacity batteries, such as those for electric vehicles or energy storage devices, is increasing, the battery cell is used in the form of a battery pack in which a plurality of battery modules are connected to each other.

One of the major research tasks for a battery cell, which is the basic unit of a battery module, is to improve safety. For example, lithium battery cells may undergo thermal runaway due to electrolyte decomposition reactions caused by heat generation from defects in cell such as internal short circuits or system failures such as overcharge and overdischarge. In this case, the internal pressure of the battery may rise rapidly, which may cause an explosion.

Generally, an evaluation method of heating a battery is performed to evaluate the thermal stability of the battery. Typically, battery test equipment includes a battery heating module and a flow meter. The battery heating module is configured to heat a battery in a state in which the battery is built inside and to discharge gas generated during battery ignition in one direction. The flow meter is connected to the battery heating module and measures a pressure and flow rate of gas discharged from the battery heating module.

In the related art, during a process of evaluating the thermal stability of a battery using the battery test equipment configured in this manner, there is a problem in that the reliability of the test is low due to the absence of a measuring means for measuring the likelihood of leakage within the battery test equipment, which makes it difficult to confirm whether there is a gas leak in the battery heating module or the flow meter.

### [Disclosure]

### [Technical Problem]

The present disclosure has been made to solve the problems of the related art as described above, and an object of the present disclosure is to provide a battery test equipment leak inspection device and inspection method that can secure test reliability by inspecting in advance whether there is a gas leak in battery test equipment before evaluating the thermal stability of a battery using the battery test equipment.

### [Technical Solution]

To achieve the above object, a battery test equipment leak inspection device according to a preferred exemplary embodiment of the present disclosure includes: a main tube detachably connected to an inspection target including a battery heating module or an inspection target including a flow meter connected to a battery heating module, and configured to communicate with an interior of the inspection target; a gas supply unit connected to the main tube and configured to supply a gas for leak inspection into the inspection target through the main tube; and a pressure measurement unit connected to the main tube and configured to measure a change in gas pressure in the main tube and the inspection target.

The main tube is opened at one end connected to the inspection target.

A connecting flange detachably connected to a connecting flange of the inspection target is provided at one end of the main tube.

The two connecting flanges are coupled through bolt coupling.

A gasket is provided between the two connecting flanges.

The gas supply unit includes a gas supply hose connected to the main tube, and a gas valve connected to the gas supply hose and configured to open and close a gas flow.

The battery heating module includes a module box having a battery built therein, a battery heating unit provided in the module box and configured to heat the battery, and a gas discharge portion provided on one side of the module box, gas generated during battery heating being discharged to the outside through the gas discharge portion.

One end of the flow meter is detachably connected to the battery heating module, and the other end of the flow meter is detachably connected to the main tube.

To achieve the above object, a battery test equipment leak inspection method according to a preferred exemplary embodiment of the present disclosure includes first inspection target leak inspection of inspecting a first inspection target for a leak, and second inspection target leak inspection of inspecting a second inspection target for a leak.

The inspection target includes a first inspection target consisting only of a battery heating module, and a second inspection target including a flow meter connected to the battery heating module.

The first inspection target leak inspection includes inspecting the battery heating module for a leak, and the second inspection target leak inspection includes inspecting the flow meter for a leak.

The first inspection target leak inspection includes connecting a battery test equipment leak inspection device to the first inspection target, determining whether there is a leak in the first inspection target, and replacing or repairing the first inspection target determined to have a leak.

The determining whether there is a leak in the first inspection target includes opening a gas valve to inject a gas for leak inspection into the main tube and the first inspection target through a gas supply hose, closing the gas valve to stop the injection of the gas for leak inspection into the main tube and the first inspection target, and measuring whether there is a variation in gas pressure filled in the main tube and the first inspection target.

When there is no variation in gas pressure, it is determined that there is no leak, and when the gas pressure decreases, the first inspection target is determined to have a leak.

The second inspection target leak inspection includes configuring a second inspection target by connecting a flow meter to a battery heating module in which there is no leak, connecting the battery test equipment leak inspection device to the second inspection target, determining whether there is a leak in the second inspection target, and replacing or repairing the flow meter of the second inspection target determined to have a leak.

The determining whether there is a leak in the second inspection target includes opening a gas valve to inject a gas for leak inspection into the main tube and the second inspection target through a gas supply hose, closing the gas valve to stop the injection of the gas for leak inspection into the main tube and the second inspection target, and measuring whether there is a variation in gas pressure filled in the main tube and the second inspection target.

When there is no variation in gas pressure, it is determined that there is no leak, and when the gas pressure decreases, the second inspection target is determined to have a leak.

### [Advantageous Effects]

According to the battery test equipment leak inspection device and inspection method of the present disclosure, it is possible to secure test reliability by inspecting in advance whether there is a gas leak in battery test equipment before evaluating the thermal stability of a battery using the battery test equipment, and replacing or repairing the entire or part of the equipment when a leak is confirmed.

### [Description of Drawings]

FIG. 1 is a diagram illustrating a configuration of battery test equipment.
FIG. 2 is a diagram illustrating a battery test equipment leak inspection device according to an exemplary embodiment of the present disclosure connected to a first inspection target.
FIG. 3 is a diagram illustrating the battery test equipment leak inspection device according to an exemplary embodiment of the present disclosure connected to a second inspection target.
FIG. 4 is an exploded perspective view illustrating a connection relationship between an inspection target and the battery test equipment leak inspection device according to an exemplary embodiment of the present disclosure.
FIG. 5 is a process diagram showing an overall inspection process of a battery test equipment leak inspection method according to an exemplary embodiment of the present disclosure.
FIG. 6 is a flowchart showing a process of inspecting whether there is a leak in an inspection target by the battery test equipment leak inspection method according to an exemplary embodiment of the present disclosure.

### [Best Mode]

Hereinafter, a battery test equipment leak inspection device and inspection method according to preferred exemplary embodiments of the present disclosure will be described in detail with reference to the accompanying drawings.

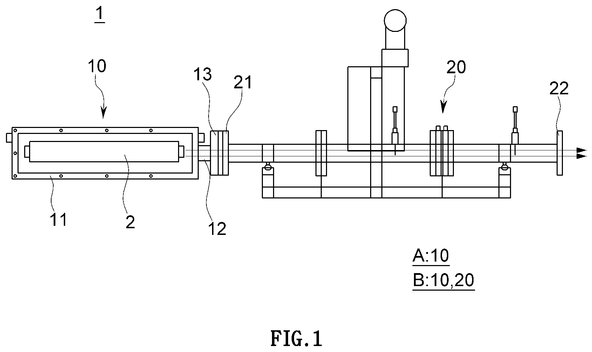

FIG. 1 is a diagram illustrating a configuration of battery test equipment.

Battery test equipment 1 includes a battery heating module 10 and a flow meter 20.

The battery heating module 10 is configured to heat a battery 2 in a state in which the battery is built inside and to discharge gas generated during battery ignition in one direction, and includes a module box 11, a battery heating unit (not illustrated), and a gas discharge portion 12.

The module box 11 has a battery built therein and is open on one side. The module box 11 is made of metal so that it can withstand ignition and explosion of the battery. The battery heating unit emits heat by a heating pad provided inside the module box 11 when power is supplied, thereby heating the battery. The gas discharge portion 12 is connected to one open side of the module box 11 and has a connecting flange 13 at an end portion thereof.

The flow meter 20 is connected to the battery heating module 10 and measures a pressure and flow rate of gas discharged from the battery heating module 10. The gas discharged from the battery heating module 10 is introduced through one side of the flow meter 20, passes through the interior of the flow meter 20, and is then discharged to the outside through the other side. Connecting flanges 21 and 22 are provided on one side and the other side of the flow meter 20, respectively. The connecting flange 21 on one side of the flow meter 20 is detachably connected to the connecting flange 13 of the battery heating module 10 through bolt coupling.

According to the battery test equipment 1 configured in this way, when the battery is heated within the module box 11 of the battery heating module 10, the battery ignites, gas is generated, and the generated gas is discharged to the outside via the flow meter 20. The flow meter 20 measures the flow rate and explosion pressure of the gas generated during battery ignition. Such a test can be used to evaluate the thermal stability of a battery.

Note that, for accurate measurement in the flow meter 20, the battery heating module 10 and the flow meter 20 are required to have no gas leak. To this end, in the present disclosure, a battery test equipment leak inspection device 100 is connected to the battery test equipment 1 to inspect whether there is a gas leak in the battery test equipment 1, and when there is a gas leak, the entire or part of the equipment can be replaced.

As described above, since the battery test equipment 1 includes the battery heating module 10 and the flow meter 20, it is necessary to inspect whether there is a leak in each of the battery heating module 10 and the flow meter 20. To this end, a first inspection target A may be configured by only the battery heating module 10, and a second inspection target B may be configured by connecting the flow meter 20 to the battery heating module 10. For the battery heating module 10 constituting the second inspection target B, a product that has passed a leak inspection and has no leak can be used.

Below, a connection structure for connecting the battery test equipment leak inspection device 100 according to an exemplary embodiment of the present disclosure to either the first inspection target A or the second inspection target B, and the components constituting the leak inspection device will be described in detail. Furthermore, a method for inspecting whether there is a gas leak in battery test equipment using the battery test equipment leak inspection device 100 according to an exemplary embodiment of the present disclosure will also be described in detail.

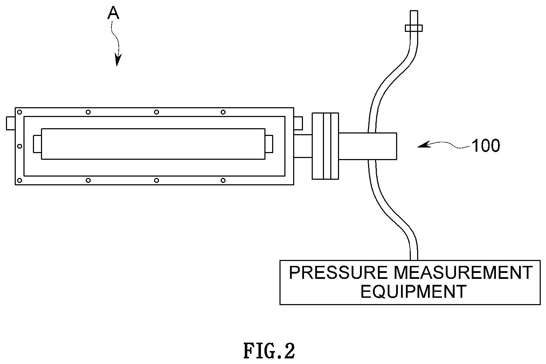

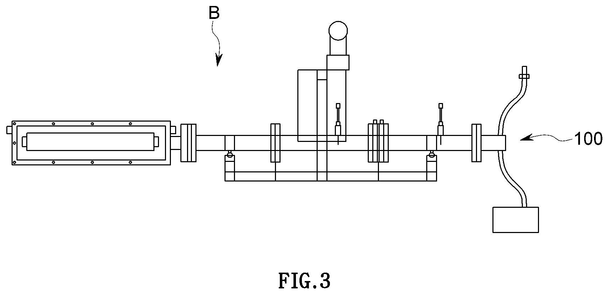

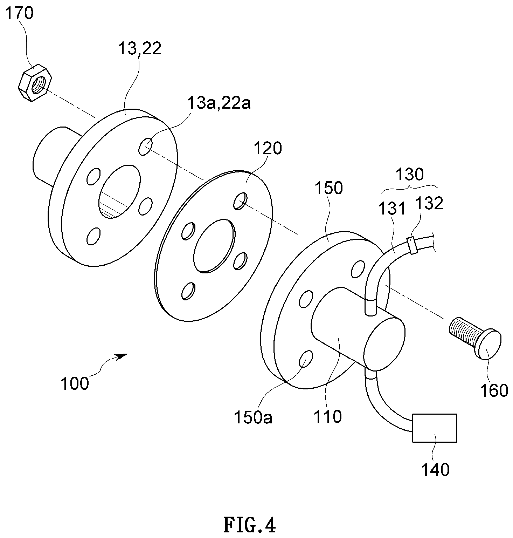

FIG. 2 is a diagram illustrating a battery test equipment leak inspection device according to an exemplary embodiment of the present disclosure connected to a first inspection target, FIG. 3 is a diagram illustrating the battery test equipment leak inspection device according to an exemplary embodiment of the present disclosure connected to a second inspection target, and FIG. 4 is an exploded perspective view illustrating a connection relationship between an inspection target and the battery test equipment leak inspection device according to an exemplary embodiment of the present disclosure.

As described above, the first inspection target A may be configured by only the battery heating module 10, and the second inspection target B may be configured by connecting the flow meter 20 to the battery heating module 10.

The battery test equipment leak inspection device 100 according to an exemplary embodiment of the present disclosure includes a main tube 110, a gasket 120, a gas supply unit 130, and a pressure measurement unit 140.

The main tube 110 is detachably connected to either the first inspection target A or the second inspection target B and is connected to the interior of either the first inspection target A or the second inspection target B. To this end, the main tube 110 is formed with an internal space to be filled with gas and is opened at one end that is connected to either the first inspection target A or the second inspection target B. One end of the main tube 110 is provided with a connecting flange 150 that is detachably connected to either the connecting flange 13 of the first inspection target A or the connecting flange 22 of the second inspection target B. The connecting flanges 13, 22, and 150 are detachably connected through bolt coupling using a bolt 160 and a nut 170. To this end, bolt through holes 13a, 22a, and 150a through which the bolt 160 passes are formed in the connecting flanges 13, 22, and 150, respectively.

A gasket 120 is provided between two of the connecting flanges 13, 22, and 150 that are connected to each other, to prevent gas leakage through a connection portion.

The gas supply unit 130 is connected to the main tube 110 to supply a gas for leak inspection to the main tube 110, and includes a gas supply hose 131 connected to the main tube 110, and a gas valve 132 connected to the gas supply hose 131 to open and close a gas flow. The gas supply hose 131 is connected to a gas tank (not illustrated).

The pressure measurement unit 140 is connected to the main tube 110 and measures a pressure change of the gas for leak inspection filled in the main tube 110 and the first inspection target A or the second inspection target B. The pressure measurement unit 140 may be connected to the main tube 110 via a hose.

The battery test equipment gas leak inspection device 100 according to an exemplary embodiment of the present disclosure configured as described above is connected to the first inspection target A as illustrated in FIG. 2 to inspect the battery heating module 10 for a gas leak, or is connected to the second inspection target B as illustrated in FIG. 3 to inspect the flow meter 20 for a gas leak.

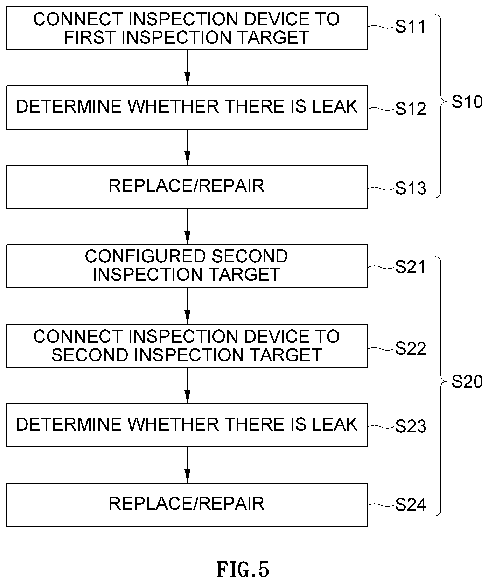

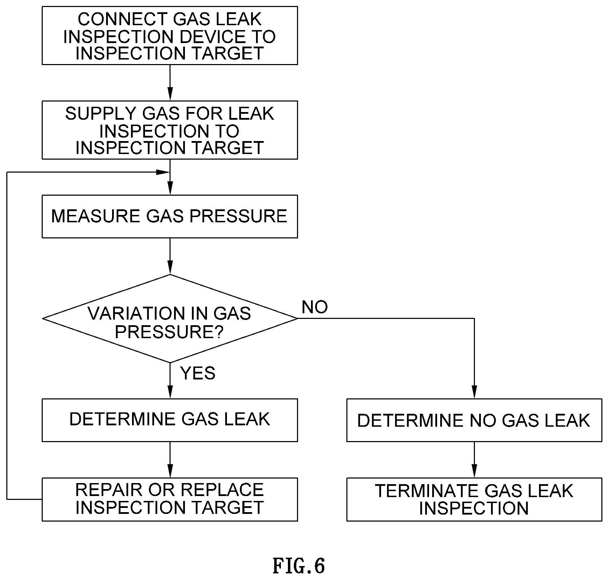

FIG. 5 is a process diagram showing an overall inspection process of a battery test equipment leak inspection method according to an exemplary embodiment of the present disclosure, and FIG. 6 is a flowchart showing a process of inspecting whether there is a leak in an inspection target by the battery test equipment leak inspection method according to an exemplary embodiment of the present disclosure.

A battery test equipment leak inspection method according to an exemplary embodiment of the present disclosure includes a first inspection target leak inspection step S10 of inspecting whether there is a gas leak in the first inspection target A, and a second inspection target leak inspection step S20 of inspecting whether there is a gas leak in the second inspection target B.

The first inspection target leak inspection step S10 includes an inspection device connection step S11 of connecting an inspection device to the first inspection target A, a leak determination step S12 of determining whether there is a leak in the first inspection target A, and a replacement/repair step S13 of replacing or repairing the battery heating module 10 when it is determined that there is a leak in the first inspection target A.

In the inspection device connection step S11, the connecting flange 150 of the inspection device is connected to the connecting flange 13 of the battery heating module 10 using the bolt 160 and the nut 170. The gasket 120 is fitted between the two connecting flanges 13 and 150.

In the leak determination step S12, after connecting the inspection device, the gas valve 132 is opened to supply a gas for leak inspection into the main tube 110 through the gas supply hose 131, and when the battery heating module 10 is filled with the gas for leak inspection, the gas valve 132 is closed and then the presence or absence of pressure variation is measured through the pressure measurement unit 140. When there is no pressure variation, a pass determination is made since there is no leak in the battery heating module 10, and when the pressure decreases, a fail determination is made since there is a leak in the battery heating module 10.

In the replacement/repair step S13, if the battery heating module 10 is determined to fail, the battery heating module 10 is replaced with a new one or a leaking portion is located and repaired. A variety of currently available known technologies may be used to locate and repair a leaking portion.

The second inspection target leak inspection step S20 includes an inspection target configuration step S21 of configuring the second inspection target B, an inspection device connection step S22 of connecting the inspection device to the second inspection target B, a leak determination step S23 of determining whether there is a leak in the second inspection target, and a replacement/repair step S24 of replacing or repairing the flow meter 20 when it is determined that there is a leak in the second inspection target B.

In the inspection target configuration step S21, the flow meter 20 is connected to the battery heating module 10 to configure the second inspection target B. The battery heating module 10 that has been determined to pass in the first inspection target leak inspection step S10 may be used. Therefore, in the second inspection target leak inspection step S20, since there is no leak in the battery heating module 10, the flow meter 20 may be inspected for a leak.

In the inspection device connection step S22, the connecting flange 150 of the inspection device is connected to the connecting flange 22 of the flow meter 20 using the bolt 160 and the nut 170. The gasket 120 is fitted between the two connecting flanges 22 and 150.

The leak determination step S23 is the same as the leak determination step S12 for the first inspection target A, so its description will be omitted.

In the replacement/repair step S24, if the second inspection target B is determined to fail, only the flow meter 20 is replaced with a new one or a leaking portion is located and repaired. A variety of currently available known technologies may be used to locate and repair a leaking portion.

Although the battery test equipment leak inspection device and inspection method according to the preferred exemplary embodiments of the present disclosure have been described in detail with reference to the accompanying drawings, the present disclosure is not limited to the above-described exemplary embodiments and may be implemented in various modified forms within the scope of the claims.

### [Description of Main Reference Numerals of Drawings]

1: battery test equipment 10: battery heating module
11: module box 12: gas discharge portion
13: connecting flange 20: flow meter
21, 22: connecting flange 100: battery test equipment leak inspection device
110: main tube 120: gasket
130: gas supply unit 131: gas supply hose
132: gas valve 140: pressure measurement unit
150: connecting flange 160: bolt
170: nut A: first inspection target
B: second inspection target

## Claims

1. A battery test equipment leak inspection device comprising:
a main tube detachably connected to an inspection target comprising a battery heating module or the inspection target comprising a flow meter connected to the battery heating module, and configured to communicate with an interior of the inspection target;
a gas supply unit connected to the main tube and configured to supply gas for leak inspection into the inspection target through the main tube; and
a pressure measurement unit connected to the main tube and configured to measure a change in gas pressure in the main tube and the inspection target.

2. The battery test equipment leak inspection device of claim 1, wherein the main tube is opened at one end connected to the inspection target.

3. The battery test equipment leak inspection device of claim 2, further comprising a connecting flange provided at one end of the main tube and detachably connected to a connecting flange of the inspection target.

4. The battery test equipment leak inspection device of claim 3, wherein the two connecting flanges are coupled through a bolt.

5. The battery test equipment leak inspection device of claim 3, further comprising a gasket provided between the two connecting flanges.

6. The battery test equipment leak inspection device of claim 1, wherein the gas supply unit comprises
a gas supply hose connected to the main tube, and
a gas valve connected to the gas supply hose and configured to open and close a gas flow.

7. The battery test equipment leak inspection device of claim 3, wherein the battery heating module comprises
a module box having a battery built therein,
a battery heating unit provided in the module box and configured to heat the battery, and
a gas discharge portion provided on one side of the module box, wherein gas generated during battery heating is discharged to the outside through the gas discharge portion.

8. The battery test equipment leak inspection device of claim 7, wherein one end of the flow meter is detachably connected to the battery heating module, and the other end of the flow meter is detachably connected to the main tube.

9. A battery test equipment leak inspection method comprising inspecting an inspection target for a leak using a battery test equipment leak inspection device of claim 1.

10. The battery test equipment leak inspection method of claim 9, wherein the inspection target comprises
a first inspection target consisting only of the battery heating module, and
a second inspection target comprising the flow meter connected to the battery heating module.

11. The battery test equipment leak inspection method of claim 10, further comprising:
inspecting the first inspection target for a leak; and
inspecting the second inspection target for a leak.

12. The battery test equipment leak inspection method of claim 11, wherein the inspecting the first inspection target comprises inspecting the battery heating module for a leak, and the inspecting the second inspection target comprises inspecting the flow meter for a leak.

13. The battery test equipment leak inspection method of claim 12, wherein the inspecting the first inspection target further comprises
connecting the battery test equipment leak inspection device to the first inspection target;
determining whether there is a leak in the first inspection target; and
replacing or repairing the first inspection target being determined to have a leak.

14. The battery test equipment leak inspection method of claim 13, wherein the determining whether there is a leak in the first inspection target comprises
opening a gas valve to inject gas for leak inspection into the main tube and the first inspection target through a gas supply hose;
closing the gas valve to stop the injection of the gas for leak inspection into the main tube and the first inspection target; and
measuring whether there is a variation in gas pressure filled in the main tube and the first inspection target, and
when there is no variation in gas pressure, determining that there is no leak, and when the gas pressure decreases, determining that the first inspection target has a leak.

15. The battery test equipment leak inspection method of claim 13, wherein the inspecting the second inspection target comprises
configuring the second inspection target by connecting the flow meter to the battery heating module in which there is no leak;
connecting the battery test equipment leak inspection device to the second inspection target;
determining whether there is a leak in the second inspection target; and
replacing or repairing the second inspection target being determined to have a leak.

16. The battery test equipment leak inspection method of claim 15, wherein the determining whether there is a leak in the second inspection target comprises
opening a gas valve to inject gas for leak inspection into the main tube and the second inspection target through a gas supply hose;
closing the gas valve to stop the injection of the gas for leak inspection into the main tube and the second inspection target; and
measuring whether there is a variation in gas pressure filled in the main tube and the second inspection target; and
when there is no variation in gas pressure, determining that there is no leak, and when the gas pressure decreases, determining the second inspection targethas a leak.
